# EUROPÄISCHE PATENTSCHRIFT

(11) **EP 2 944 493 B1**
(45) Veröffentlichungstag und Bekanntmachung des Hinweises auf die Patenterteilung: **18.12.2019**
(21) Anmeldenummer: 15166731.8
(22) Anmeldetag: 07.05.2015
(51) Int. Cl.: B60K 1/04, B66F 9/075, B60L 50/72, B60L 58/30

(54) **ANORDNUNG MIT EINER ENERGIEVERSORGUNGSEINHEIT FÜR MOBILE ARBEITSMASCHINE**
ARRANGEMENT WITH AN ENERGY SUPPLY UNIT FOR MOBILE WORKING MACHINE
ARRANGEMENT AVEC UNE UNITÉ D'ALIMENTATION EN ÉNERGIE POUR UNE MACHINE DE TRAVAIL MOBILE

(30) Priorität: 12.05.2014 DE 102014106644
(43) Veröffentlichungstag der Anmeldung: 18.11.2015
(73) Patentinhaber: STILL GmbH, 22113 Hamburg (DE)
(72) Erfinder: Claus, Alexander, 22303 Hamburg (DE)
(74) Vertreter: Patentship Patentanwaltsgesellschaft mbH

(56) Entgegenhaltungen:
- CA-A1- 2 854 682
- DE-A1-102012 107 604
- US-A1- 2001 052 433
- US-A1- 2003 070 850
- US-A1- 2005 095 500

## Beschreibung

Die Erfindung betrifft eine Anordnung für eine elektrisch angetriebene mobile Arbeitsmaschine. Insbesondere betrifft die Erfindung eine Anordnung umfassend eine Energieversorgungseinheit für eine elektrisch angetriebene mobile Arbeitsmaschine, etwa einen Gegengewichtsgabelstapler, wobei die Energieversorgungseinheit als Wechseleinheit in ein Batterieaufnahmefach der Arbeitsmaschine eingesetzt werden kann und ein quaderförmiges Gehäuse aufweist, innerhalb dessen sich alle Bauteile der Energieversorgungseinheit befinden.

Ein Ausführungsbeispiel für eine mobile Arbeitsmaschine, die elektrisch angetrieben wird, ist ein batterieelektrisch betriebenes Flurförderzeug. Unter diesen sind beispielsweise elektrisch angetriebene Gegengewichtsgabelstapler bekannt, die mit einer auswechselbaren Traktionsbatterie zum Einsatz kommen und an ihrer Vorderachse ein Hubgerüst mit Lastaufnahmemitteln aufweisen, insbesondere eine Lastgabel. Dabei wird die Stabilität eines solchen Flurförderzeugs mit einer aufgenommenen Last entscheidend von dem Gesamtschwerpunkt des Fahrzeugs bestimmt, der wiederum von der Position eines Gegengewichtes, aber insbesondere auch von der Position und dem Gewicht der Traktionsbatterie abhängt. Bei herkömmlichen bekannten Traktionsbatterien handelt es sich dabei um eine relativ schwere Bleibatterie, die somit erheblich zu einem Gegenmoment gegenüber einer aufgenommenen Last beiträgt. Um instabile Zustände mit der Gefahr eines Umkippens zu vermeiden, aber auch beim Bremsen sind das Fahrzeuggewicht und der Schwerpunkt jeweils von Bedeutung.

Bei den nach dem Stand der Technik bekannten Bleibatterien erfolgt eine chemische Reaktion zwischen Schwefelsäure und Blei zur Speicherung der elektrischen Energie. Durch neuere Technologien können inzwischen Batterien bzw. Akkumulatoren hergestellt werden und auch im industriellen Einsatz verwendet werden, die bessere Leistungsdaten bieten. Solche Batterien kann man als Hochleistungsbatterien bezeichnen, die sich dadurch auszeichnen dass sie gegenüber einem Blei-Säureakkumulator eine höhere Energiedichte in Bezug auf Gewicht und/oder Volumen aufweisen und eine andere Technik als eine Blei-Säure Reaktion für die Energiespeicherung nutzen. Hinzu kommt bei vielen Hochleistungsbatterien als Merkmal, dass eine hohe Leistung beim Entladen abgegeben werden kann und/oder mit großer Leistung geladen werden kann. Die typischen Energiedichten in Bezug auf Gewicht und/oder Volumen liegen bei einer Hochleistungsbatterie dabei mindestens für einen der beiden Werte oberhalb und außerhalb der entsprechenden Kenngrößen für Blei-Säurebatterien.

Bereits Nickel-Cadmium Batterien weisen zwar keinen erheblichen Gewichtsvorteil auf, haben jedoch eine bis zum dreifachen höhere Energiedichte in Bezug auf das Volumen. Weitere bekannte Technologien für Akkumulatoren bzw. wieder aufladbare Batterien unter Einsatz von Nickel sind beispielsweise Nickel-Metallhydrid, Nickel-Eisen, Nickel-Wasserstoff, Nickel-Zink und Silber-Zink. Daneben sind auch Natrium-Nickelchlorid und Natrium-Schwefel Akkumulatoren bekannt.

Zunehmend in größerem Umfang eingesetzt werden jedoch Lithium-Ionenbatterien, die eine in Serie anwendbare Zuverlässigkeit erreicht haben, sich durch hohe Energiedichte auszeichnen und nur einem geringen Memoryeffekt unterliegen sowie ein Entladen der Batterie bzw. Aufladen der Batterie mit großer Leistung ermöglichen. Bei der Lithium-Ionenbatterie sind ebenfalls unterschiedliche Technologien bekannt, wie beispielsweise Lithium-Polymer, Lithium-Cobaltdioxid, Lithium-Luft, Lithium-Titanat, Lithium-Eisenphosphat, Lithium-Mangan und Zinn-Schwefel-Lithiumionen.

Besonders vorteilhaft ist der Einsatz solcher Hochleistungsbatterien bei Fahrzeugen und beispielsweise Flurförderzeugen, da aufgrund der hohen Energiedichte in Bezug auf das Volumen bei dem vorgegebenen Bauraum für die Batterie eine größere Menge elektrische Energie gespeichert werden kann und somit die Reichweite eines Fahrzeugs bzw. die Einsatzdauer des Flurförderzeugs vergrößert werden kann.

Bei batterie-elektrisch betriebenen Gegengewichtgabelstaplern, bei denen insbesondere Lithium-Ionenbatterie als Hochleistungsbatterien zum Einsatz kommen sollen, ergibt sich jedoch der Nachteil, dass durch das geringere Gewicht der Traktionsbatterie die Schwerpunktlage des gesamten Fahrzeuges und somit die Stabilitätssituation verändert wird. Wenn beispielsweise eine bestehende Bleibatterie durch eine Lithium-Ionenbatterie ersetzt wird, kann ein erheblicher Gewichtsunterschied entstehen, wenn eine Blei-Säurebatterie eine übliche Dichte von 2700 kg/m³ aufweist, eine Lithium-Ionenbatterie jedoch nur von ca. 2100 kg/m³. Der Gegengewichtgabelstapler müsste dann mit einem entsprechend größeren Gegengewicht versehen werden. Dies ist jedoch dann nicht möglich, oder mit Nachteilen verbunden, wenn ein Wechselbetrieb sowohl mit Blei-Säurebatterien wie auch mit Lithium-Ionenbatterien erfolgen soll. Auch beruhen Angaben zur Tragfähigkeit wie auch zur Steigfähigkeit im Fahrbetrieb bei Flurförderzeugen auf den Gewichtswerten einer Bleibatterie, und sind folglich bei Verwendung einer Hochleistungsbatterie mit gleichen geometrischen Maßen nicht mehr korrekt.

Bekannt ist auch weiterhin, eine Energieversorgungseinheit mit Brennstoffzellen anstelle der Traktionsbatterie einzusetzen, die dieselben geometrischen Maße einnimmt und als ein Bauteil eingesetzt werden kann. Dies ist ebenso möglich für eine Energieversorgungseinheit als Hybridbaugruppe, die neben einer Hochleistungsbatterie einen Verbrennungsmotor oder eine Brennstoffzelle zusätzlich enthält.

Die US 2003/070850 A1 offenbart eine Brennstoffzelleneinheit, die anstelle einer Traktionsbatterie bei einem Niederhubgabelhubwagen oder allgemein einem Flurförderzeug eingesetzt wird. In einer Ausführungsform ist eine Form beschrieben, bei der oberhalb eines den Bodenbereich einnehmenden Brennstofftanks ein Zusatzgewicht angeordnet ist.

Der vorliegenden Erfindung liegt daher die Aufgabe zugrunde, eine Anordnung zur Verfügung zu stellen, die die zuvor genannten Nachteile vermeidet, kostengünstig herzustellen ist und einen Wechselbetrieb mit Blei-Säurebatterien ermöglicht.

Die Aufgabe wird erfindungsgemäß dadurch gelöst, dass bei einer Anordnung umfassend eine Energieversorgungseinheit für eine elektrisch angetriebene mobile Arbeitsmaschine, insbesondere einen Gegengewichtsgabelstapler, wobei die Energieversorgungseinheit als Wechseleinheit in ein Batterieaufnahmefach der Arbeitsmaschine eingesetzt werden kann und ein quaderförmiges Gehäuse aufweist, innerhalb dessen sich alle Bauteile der Energieversorgungseinheit befinden, die Anordnung mindestens ein plattenförmig ausgebildetes Zusatzgewicht umfasst, das an mindestens einer äußeren Wandfläche des Gehäuses über Befestigungsmittel flächig und demontierbar angeordnet ist, wobei das Zusatzgewicht so bemessen ist, dass die Anordnung im Wesentlichen dasselbe Gesamtgewicht aufweist wie eine Blei-Säuretraktionsbatterie gleicher äußerer Abmessungen.

Dadurch können Energieversorgungseinheiten umfassende Anordnungen hergestellt werden, insbesondere eine Anordnung mit einer Hochleistungsbatterie und unter diesen eine Lithium-Ionenbatterie, die aufgrund der demontierbar angebrachten plattenförmigen Zusatzgewichte sich in eine mobile Arbeitsmaschine eingesetzt genauso verhält in Bezug auf Gewicht und Schwerpunktlage, wie eine herkömmliche Blei-Säuretraktionsbatterie. Dadurch können beispielsweise Flurförderzeuge als mobile Arbeitsmaschine mit den gleichen Abmessungen und Tragfähigkeiten genutzt werden, wie bisher. Auch bei Schleppern als Flurförderzeugen ergibt sich der Vorteil, dass die gleiche Traktionskraft und die gleiche Verzögerungsleistung in Bezug auf einen Anhänger oder einen Anhängerzug aufgebracht werden kann, da diese vom Fahrzeuggewicht abhängen. Vorteilhaft können bei der Planung der benötigten Fahrzeuge dieselben Fahrzeuge wie bisher mit denselben Leistungsdaten eingesetzt werden in Bezug auf Hubleistung oder Traktionsleistung. Die Befestigungsmittel ermöglichen dabei eine Demontage der plattenförmigen Zusatzgewichte. Diese können beispielsweise Schraubverbindungen sein, mit denen das plattenförmige Zusatzgewicht auf Seitenwände, eine Bodenfläche oder eine sonstige Wandfläche des Gehäuses der Energieversorgungseinheit aufgeschraubt wird. Als weitere Vorteile der Demontierbarkeit ergibt sich, dass bei einem Reparaturfall der Energieversorgungseinheit, beispielsweise einer Hochleistungsbatterie, die Zusatzgewichte abgenommen werden können und für Servicezwecke die Energieversorgungseinheit mit leichteren Hilfsmitteln sowie einfacher bewegt und transportiert werden kann.

Vorteilhaft ist die Wandfläche eine Seitenwand.

An einer Seitenwand lässt sich leicht ein plattenförmiges Zusatzgewicht anbringen, ohne die geometrischen Außenmaße des Gehäuses der Energieversorgungseinheit übermäßig zu vergrößern. Dadurch kann leicht umgesetzt werden, dass die Energieversorgungseinheit wie eine herkömmliche Blei-Säuretraktionsbatterie in ein Batterieaufnahmefach einer mobilen Arbeitsmaschine eingesetzt werden kann.

Es können an allen vier Seitenwänden plattenförmige Zusatzgewichte angeordnet sein.

Dadurch ergibt sich eine vorteilhaft gleichmäßige Gewichtsverteilung und es ist möglich, den Schwerpunkt der Anordnung vergleichbar einer Blei-Säuretraktionsbatterie im Schnittpunkt der Raumdiagonalen zu halten.

In einer günstigen Ausgestaltung sind die Befestigungsmittel eine Verschraubung.

Die Befestigungsmittel können aus einer Klemmverbindung oder einer Einhängevorrichtung bestehen.

In günstiger Ausgestaltung ist die Energieversorgungseinheit eine Hochleistungsbatterie.

Vorteilhaft ist die Hochleistungsbatterie eine Lithium-Ionenbatterie.

Lithium-Ionenbatterien stellen die unter Kostengesichtspunkten sowie Lieferbarkeit am besten zur Verfügung stehenden Hochleistungsbatterien dar, die in Bezug auf die Energiedichte über dem Volumen wie auch dem Gewicht die optimale Leistung erbringen. Es ist daher besonders vorteilhaft, eine Lithium-Ionenbatterie in Bezug auf Abmessungen und Gewicht austauschbar mit einer Blei-Säurebatterie als Traktionsbatterie zu gestalten.

Die Energieversorgungseinheit kann Brennstoffzellen aufweisen.

Die Energieversorgungseinheit kann als Hybridbaugruppe eine Hochleistungsbatterie und einen Verbrennungsmotor aufweisen.

Die Aufgabe wird auch gelöst durch ein System aus mindestens einer mobilen Arbeitsmaschine, insbesondere einem Gegengewichtsgabelstapler, mindestens einer Blei-Säuretraktionsbatterie und mindestens einer Anordnung wie sie zuvor beschrieben wurde.

Es ist eine Nutzung von beispielsweise Hochleistungsbatterien als Energieversorgungseinheit möglich, ohne dass eine neue mobile Arbeitsmaschine bzw. ein Flurförderzeug wie etwa ein Gegengewichtsgabelstapler entwickelt werden muss in Bezug auf Rahmen, Tragfähigkeit und Antrieb.

Vorteilhaft kann eine Anordnung, die eine Energieversorgungseinheit umfasst, mit unterschiedlichen Zusatzgewichten und/oder unterschiedlicher Bestückung mit Zusatzgewichten mehrere Typen von Blei-Säuretraktionsbatterien ersetzen.

Dadurch kann ein und dieselbe Energieversorgungseinheit in verschiedenen Flurförderzeugen bzw. mobilen Arbeitsmaschinen eingesetzt werden, die unterschiedliche Typen von Blei-Säuretraktionsbatterien benötigen, da jeweils die Gewichtsverhältnisse identisch gestaltet werden können. Dies ist soweit möglich, wie die Energieversorgungseinheit mit dem jeweils nötigen plattenförmige Zusatzgewicht geometrisch in das jeweilige Batteriefach einsetzbar ist.

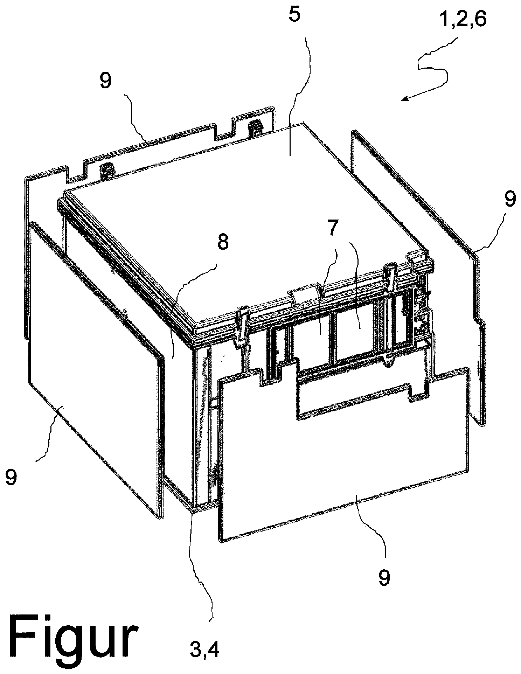

Weitere Vorteile und Einzelheiten der Erfindung werden anhand des in der schematischen Figur dargestellten Ausführungsbeispiels näher erläutert. Hierbei zeigt die Figur eine erfindungsgemäße Anordnung umfassend eine Energieversorgungseinheit 1 in Perspektivenansicht, die eine Hochleistungsbatterie 2 ist. Ein Batterietrog 3 als Gehäuse 4 umschließt die hier nicht näher dargestellten Komponenten der Hochleistungsbatterie 2 und wird durch einen Deckel 5 nach oben abgeschlossen. An einer Seite der als Lithium-Ionenbatterie 6 ausgeführten Hochleistungsbatterie 2 sind Komponenten eines Batteriemanagementsystems 7 angeordnet.

Auf Seitenwänden 8 als Wandfläche 10 sind demontierbar über nicht näher dargestellte Befestigungsmittel gehaltene plattenförmige Zusatzgewichte 9 angeordnet. Durch die plattenförmigen Zusatzgewichte 9 erhält die Anordnung insgesamt ein Gewicht und eine Gewichtsverteilung wie eine vergleichbare Blei-Säurebatterie gleicher Größe.

## Patentansprüche

1. Anordnung umfassend eine Energieversorgungseinheit für eine elektrisch angetriebene mobile Arbeitsmaschine, insbesondere einen Gegengewichtsgabelstapler, wobei die Energieversorgungseinheit (1) als Wechseleinheit in ein Batterieaufnahmefach der Arbeitsmaschine eingesetzt werden kann und ein quaderförmiges Gehäuse (4) aufweist, innerhalb dessen sich alle Bauteile der Energieversorgungseinheit (1) befinden,
**dadurch gekennzeichnet,**
**dass** die Anordnung mindestens ein plattenförmig ausgebildetes Zusatzgewicht (9) umfasst, das an mindestens einer äußeren Wandfläche (10) des Gehäuses (4) über Befestigungsmittel flächig und demontierbar angeordnet ist, wobei das Zusatzgewicht (9) so bemessen ist, dass die Anordnung im Wesentlichen dasselbe Gesamtgewicht aufweist wie eine Blei-Säuretraktionsbatterie gleicher äußerer Abmessungen.

2. Anordnung nach Anspruch 1,
**dadurch gekennzeichnet,**
**dass** die Wandfläche (10) eine Seitenwand (8) ist.

3. Anordnung nach Anspruch 2,
**dadurch gekennzeichnet,**
**dass** an allen vier Seitenwänden (8) plattenförmige Zusatzgewichte (9) angeordnet sind.

4. Anordnung nach einem der Ansprüche 1 bis 3,
**dadurch gekennzeichnet,**
**dass** die Befestigungsmittel eine Verschraubung sind.

5. Anordnung nach einem der Ansprüche 1 bis 4,
**dadurch gekennzeichnet,**
**dass** die Befestigungsmittel aus einer Klemmverbindung oder einer Einhängevorrichtung bestehen.

6. Anordnung nach einem der Ansprüche 1 bis 5,
**dadurch gekennzeichnet,**
**dass** die Energieversorgungseinheit (1) eine Hochleistungsbatterie (2) ist.

7. Anordnung nach Anspruch 6,
**dadurch gekennzeichnet,**
**dass** die Hochleistungsbatterie (2) eine Lithium-Ionenbatterie (7) ist.

8. Anordnung nach einem der Ansprüche 1 bis 7,
**dadurch gekennzeichnet,**
**dass** die Energieversorgungseinheit (1) Brennstoffzellen aufweist.

9. Anordnung nach einem der Ansprüche 1 bis 8,
**dadurch gekennzeichnet,**
**dass** die Energieversorgungseinheit (1) als Hybridbaugruppe eine Hochleistungsbatterie und einen Verbrennungsmotor aufweist.

10. System aus mindestens einer mobilen Arbeitsmaschine, insbesondere einem Gegengewichtsgabelstapler, mindestens einer Blei-Säuretraktionsbatterie und mindestens einer Anordnung nach einem der vorhergehenden Ansprüche.

11. System nach Anspruch 10,
**dadurch gekennzeichnet,**
**dass** eine Anordnung mit einer Energieversorgungseinheit (1) und mit unterschiedlichen Zusatzgewichten (9) und/oder unterschiedlicher Bestückung mit Zusatzgewichten (9) mehrere Typen von Blei-Säuretraktionsbatterien ersetzt.

## Claims

1. Arrangement comprising an energy supply unit for an electrically driven mobile working machine, in particular a counterweight forklift truck, wherein the energy supply unit (1) can be inserted into a battery holding compartment of the working machine as an interchangeable unit and has a cuboidal housing (4), within which all the components of the energy supply unit (1) are located,
**characterized in that**
the arrangement comprises at least one additional weight (9) which is of plate-like form and which is arranged flat and demountably on at least one outer wall surface (10) of the housing (4) via fixing means, wherein the additional weight (9) is dimensioned such that the arrangement has substantially the same overall weight as a lead-acid traction battery of the same external dimensions.

2. Arrangement according to Claim 1,
**characterized in that**
the wall surface (10) is a side wall (8).

3. Arrangement according to Claim 2,
**characterized in that**
plate-like additional weights (9) are arranged on all four side walls (8).

4. Arrangement according to one of Claims 1 to 3,
**characterized in that**
the fixing means are a screw fixing.

5. Arrangement according to one of Claims 1 to 4,
**characterized in that**
the fixing means are composed of a clamping connection or a suspension device.

6. Arrangement according to one of Claims 1 to 5,
**characterized in that**
the energy supply unit (1) is a high-power battery (2) .

7. Arrangement according to Claim 6,
**characterized in that**
the high-power battery (2) is a lithium-ion battery (7) .

8. Arrangement according to one of Claims 1 to 7,
**characterized in that**
the energy supply unit (1) has fuel cells.

9. Arrangement according to one of Claims 1 to 8,
**characterized in that**
the energy supply unit (1) has a high-power battery and an internal combustion engine as a hybrid assembly.

10. System comprising at least one mobile working machine, in particular a counterweight forklift truck, at least one lead-acid traction battery and at least one arrangement according to one of the preceding claims.

11. System according to Claim 10,
**characterized in that**
an arrangement comprising an energy supply unit (1) and having different additional weights (9) and/or different fitting with additional weights (9) replaces multiple types of lead-acid traction batteries.

## Revendications

1. Agencement comprenant une unité d'alimentation en énergie pour une machine de travail mobile à entraînement électrique, en particulier un chariot élévateur à fourche à contrepoids, l'unité d'alimentation en énergie (1) pouvant être utilisée en tant qu'unité de remplacement dans un compartiment de batterie de la machine de travail et présentant un boîtier (4) de forme parallélépipédique à l'intérieur duquel se trouvent tous les composants de l'unité d'alimentation en énergie (1),
**caractérisé en ce que**
l'agencement comprend au moins un poids supplémentaire (9) réalisé en forme de plaque, qui est disposé à plat et de manière démontable au niveau d'au moins une surface de paroi extérieure (10) du boîtier (4) par le biais de moyens de fixation, le poids supplémentaire (9) étant dimensionné de telle sorte que l'agencement présente essentiellement le même poids total qu'une batterie de traction plomb-acide de mêmes dimensions extérieures.

2. Agencement selon la revendication 1,
**caractérisé en ce que**
la surface de paroi (10) est une paroi latérale (8) .

3. Agencement selon la revendication 2,
**caractérisé en ce que**
des poids supplémentaires (9) en forme de plaque sont disposés au niveau de toutes les quatre parois latérales (8).

4. Agencement selon l'une quelconque des revendications 1 à 3,
**caractérisé en ce que**
les moyens de fixation sont un vissage.

5. Agencement selon l'une quelconque des revendications 1 à 4,
**caractérisé en ce que**
les moyens de fixation se composent d'une connexion par serrage ou d'un dispositif d'accrochage.

6. Agencement selon l'une quelconque des revendications 1 à 5,
**caractérisé en ce que**
l'unité d'alimentation en énergie (1) est une batterie de grande puissance (2).

7. Agencement selon la revendication 6,
**caractérisé en ce que**
la batterie de grande puissance (2) est une batterie lithium-ions (7).

8. Agencement selon l'une quelconque des revendications 1 à 7,
**caractérisé en ce que**
l'unité d'alimentation en énergie (1) présente des piles à combustible.

9. Agencement selon l'une quelconque des revendications 1 à 8,
**caractérisé en ce que**
l'unité d'alimentation en énergie (1) présente, en tant que module hybride, une batterie de grande puissance et un moteur à combustion interne.

10. Système constitué d'au moins une machine de travail mobile, en particulier d'un chariot élévateur à fourche à contrepoids, d'au moins une batterie de traction plomb-acide et d'au moins un agencement selon l'une quelconque des revendications précédentes.

11. Système selon la revendication 10,
**caractérisé en ce**
**qu'**un agencement comprenant une unité d'alimentation en énergie (1) et des poids supplémentaires différents (9) et/ou un équipement différent avec des poids supplémentaires (9) remplace plusieurs types de batterie de traction plomb-acide.
